# EUROPEAN PATENT APPLICATION

(11) **EP 3 786 666 A1**
(43) Date of publication of application: **03.03.2021**
(21) Application number: 19792314.7
(22) Date of filing: 23.04.2019
(51) Int. Cl.: G01S 13/04, G01S 13/34

(54) **SHORT-DISTANCE SENSOR**

(30) Priority: 27.04.2018 JP 2018086330
(71) Applicant: Mitsumi Electric Co., Ltd., Tama-Shi, Tokyo 206-8567 (JP)
(72) Inventor: TAKADA, Yuji, Tokyo 206-8567 (JP)
(74) Representative: Epping - Hermann - Fischer
(86) International application number: PCT/JP2019/017227
(87) International publication number: WO 2019/208565

(57) **Abstract**

Provided is a proximity sensor (100) comprising a reception circuit (122) for receiving a reflection signal, from an object, of an FM-CW signal transmitted from a transmission unit (110), a DC component acquiring unit (average-value calculating unit 125) for acquiring a DC component included in the reflection signal received by the reception circuit (122), and a determination unit (threshold determining unit 128) for determining whether a near object is present or not on the basis of the DC component acquired by the DC component acquiring unit (average-value calculating unit 125). This allows implementation of a proximity sensor (100) capable of eliminating the effects of objects other than the near object that is a target to be detected and more accurately detecting, in various environments, whether the short-distance object is present or not.

## Description

### Technical Field

The present invention relates to a proximity sensor that detects whether a near object is present, and relates to a technique of detecting the presence/absence of a vehicle in a parking lot, for example.

### Background Art

Conventionally, a parking sensor is available as an apparatus for detecting the presence of a vehicle entering and leaving a parking lot. For example, PTL 1 discloses a technique in which micro waves are emitted from a parking sensor embedded in each parking lot, and when it is detected that a reflection micro wave reflected by a vehicle has a predetermined level or greater, it is determined that the vehicle is present.

### Citation List

### Patent Literature

PTL 1 Japanese Patent Application Laid-Open No. 2004-116173
PTL 2 Japanese Patent Application Laid-Open No. 2010-112879
PTL 3 Japanese Patent Application Laid-Open No. 2000-206234

### Summary of Invention

### Technical Problem

Here, it is considered that a method using micro waves can reduce detection errors in comparison with methods using a loop coil system, an optical system, a magnetic interference coil system and the like as disclosed in PTL 1.

However, for example, even when the method using micro waves is used, the level of the received reflection micro wave reflected from the vehicle bottom is close to the level of the received reflection micro wave reflected by the ceiling of the parking lot, and as such incorrect determination that a vehicle is present even when no vehicle is present may be made. Therefore, it is not applicable to the use for an environment, such as an indoor parking lot, where reflection objects other than vehicles are present.

In view of the foregoing, an object of the present invention is to provide a proximity sensor that can more correctly detect whether a near object is present under various environments.

### Solution to Problem

A proximity sensor of an embodiment of the present invention includes a transmission part including a transmission circuit configured to transmit a transmission signal; and a reception part including a reception circuit configured to receive, from an object, a reflection signal of the transmission signal transmitted from the transmission part, and acquire an I/Q signal of the reflection signal, a DC-component acquisition part configured to acquire a DC-component included in the I/Q signal, and a determination part configured to determine whether a near object is present on a basis of a DC-component acquired by the DC-component acquisition part.

### Advantageous Effects of Invention

According to the present invention, whether a near object is present is determined based on a DC-component included in a reflection signal, and it is thus possible to more correctly detect whether the near object is present under various environments.

### Brief Description of Drawings

FIG. 1 is a block diagram illustrating a configuration of a proximity sensor of an embodiment;
FIG. 2 is a diagram illustrating an example of an installation of the proximity sensor;
FIG. 3 is a diagram illustrating an example of an installation of the proximity sensor;
FIG. 4 is a graph showing a suppression of a DC value using window functions;
FIGS. 5A and 5B are graphs showing an example of a reference value stored in a reference value storage part, FIG. 5A shows a reference value of an I-signal, and FIG. 5B shows a reference value of a Q-signal;
FIG. 6 is a graph showing a reference point on an I/Q plane when a PTAT voltage is 1.3 V; and
FIG. 7 is a graph for describing a threshold value determination performed by a threshold value determination part.

### Description of Embodiment

An embodiment of the present invention is described below with reference to the accompanying drawings.

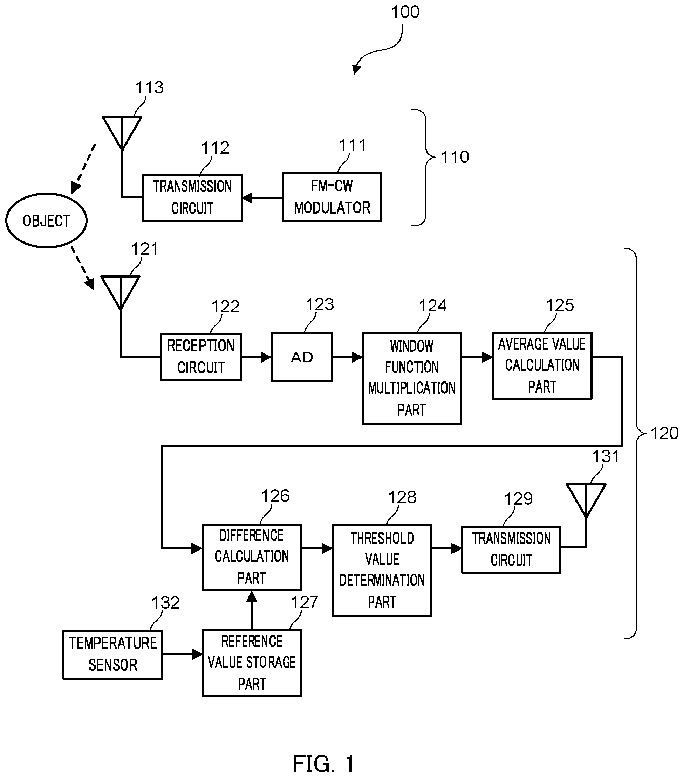

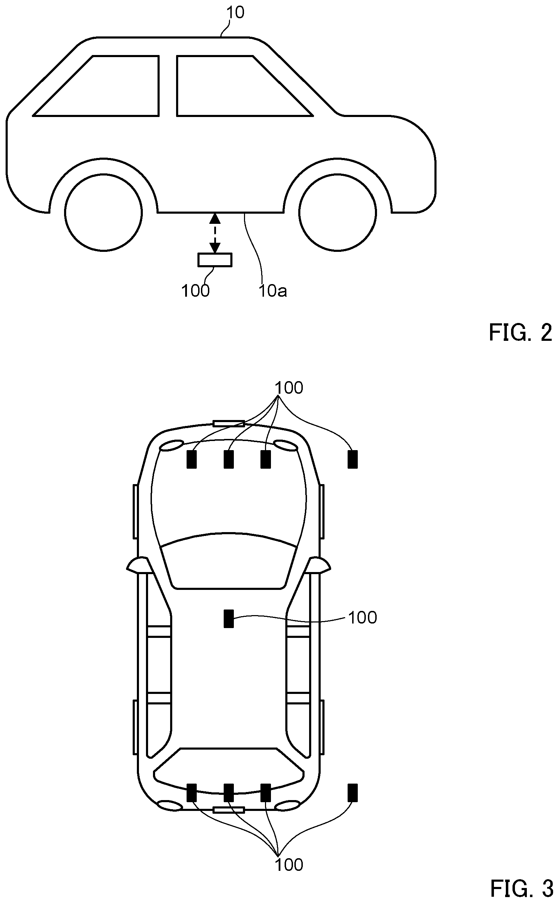

FIG. 1 is a block diagram illustrating a configuration of proximity sensor 100 of the present embodiment. As illustrated in FIGS. 2 and 3, proximity sensor 100 is disposed on the ground in each parking lot in a pay parking lot, for example. Specifically, as illustrated in FIG. 2, proximity sensor 100 transmits an FM-CW signal upward, and when vehicle 10 is present above it, proximity sensor 100 receives a reflection signal from vehicle bottom 10a. As illustrated in FIG. 3, a plurality of proximity sensors 100 may be disposed in each parking lot, or one proximity sensor 100 may be disposed in each parking lot.

The parking lot where proximity sensor 100 is disposed may be an outdoor parking lot or an indoor parking lot. In the case of an outdoor parking lot, almost no reflection signal is present when no vehicle 10 is present above proximity sensor 100, whereas in the case of an indoor parking lot, reflection signals from the ceiling and the like are received even when no vehicle 10 is present above proximity sensor 100. Proximity sensor 100 of the present embodiment is configured to be able to prevent detection errors of vehicle body 10 even when a reflection signal is received from an object other than vehicle body 10.

Proximity sensor 100 includes transmission part 110 that transmits a frequency modulated continuous wave (FM-CW) signal, and reception part 120 that receives an FM-CW signal reflected by an object such as vehicle 10.

Transmission part 110 includes FM-CW modulator 111, transmission circuit 112, and transmission antenna 113. FM-CW modulator 111 forms a frequency-modulated continuous wave and outputs the wave. Transmission circuit 112 is composed of an oscillator, a power amplifier and/or the like, and up-converts and amplifies the output of FM-CW modulator 111. With this configuration, an FM-CW signal is transmitted from transmission antenna 113. In the present embodiment, an FM-CW signal of a 24-GHz band is transmitted. Note that the band of the FM-CW signal to be transmitted is not limited to this, and FM-CW signals of other millimeter-wave bands may be transmitted. Here, the FM-CW system is a known signal as disclosed in PTLS 2 and 3, and therefore the detailed description thereof is omitted.

Reception part 120 receives, at reception antenna 121, a reflection signal from an object and enters it to reception circuit 122. Reception circuit 122 is composed of a low-noise amplifier, a mixer and/or the like, and amplifies and down-converts a reception signal. Analog-digital conversion circuit (AD) 123 samples an I/Q analog signal output from reception circuit 122 and outputs it as an I/Q digital signal.

Window function multiplication part 124 multiplies an output of AD 123 by a window function to remove an unnecessary component. More specifically, window function multiplication part 124 removes a DC-component included in the reflection signal from an object other than a near object as the detection object. That is, in the present embodiment, the unnecessary component refers to a component included in a reflection signal from an object at a remote location. For example, a reflection signal from an object at a remote location is a reflection signal from the ceiling of an indoor parking lot. In the present embodiment, window function multiplication part 124 multiplies the output of AD 123 by a hamming window.

Average value calculation part 125 calculates a direct current value (DC voltage value) by averaging each I/Q digital value. Average value calculation part 125 functions as a DC-component acquisition part that acquires a DC-component included in a reflection signal. In the present embodiment, average value calculation part 125 calculates the DC voltage value of each of I and Q by averaging the digital value of 64 samples for each of I and Q.

With a DC voltage value acquired by average value calculation part 125 and a reference value stored in reference value storage part 127 as inputs, difference calculation part 126 determines the difference between the values and outputs the difference value.

Reference value storage part 127 preliminarily stores a DC voltage value that is output from average value calculation part 125 when no near object is present. In the present embodiment, reference value storage part 127 stores a plurality of temperature-dependent DC-component values that is acquired when proximity sensor 100 is disposed in a plurality of different temperature environments, and reference value storage part 127 outputs, to difference calculation part 126, the DC-component value corresponding to the temperature detection results of temperature sensor 132. Reference value storage part 127 and difference calculation part 126 are elaborated later.

Threshold value determination part 128 performs threshold determination whether the near object is present on the basis of the difference value calculated by difference calculation part 126. The determination result acquired by threshold value determination part 128 is wirelessly transmitted to a parking lot management apparatus through transmission circuit 129 and transmission antenna 131, for example.

Next, a principle and an operation of proximity sensor 100 are described.

A conventional FM-CW millimeter wave radar mounted in a vehicle detects a relative speed and a relative distance by utilizing the principle of Doppler effect. In this manner, an FM-CW millimeter wave radar can measure the relative distance, but the modulation band width is approximately 69MHz, that is, the distance resolution is only approximately 2.2 m. Therefore, the conventional FM-CW millimeter wave radar is insufficient as a proximity sensor. For example, the distance from the ground to the vehicle bottom is as small as approximately 0.15 m, and it is therefore difficult to correctly detect the presence/absence of the vehicle body.

In view of this, proximity sensor 100 of the present embodiment detects whether the near object is present on the basis of the average value (DC value) of the received I/Q signal. Here, if the distance to an object is large (i.e., in a case of a distant object), the received I/Q signal would include a large number of components having the frequency corresponding to the distance as a beat frequency. On the contrary, the distance to a near object (e.g., a vehicle bottom) as a detection object is very small, and therefore the component included in the received I/Q signal is mainly the DC-component. That is, the present embodiment uses a feature that the greater the distance to the reflection object, higher the frequency in the reflection signal of the FM-CW signal.

The DC value is calculated using the average value calculation part 125, and thus even when the reception signal includes a high-frequency component from a distant object, such a component is suppressed, and detection errors due to the reflection signal of the distant object can be prevented.

It should be noted that the component other than the reflection signal from the near object may not be completely suppressed, and a leakage component to the average value may be generated. In view of this, in the present embodiment, window function multiplication part 124 is provided to multiply the reception signal by a window function and thus the leak component is reduced.

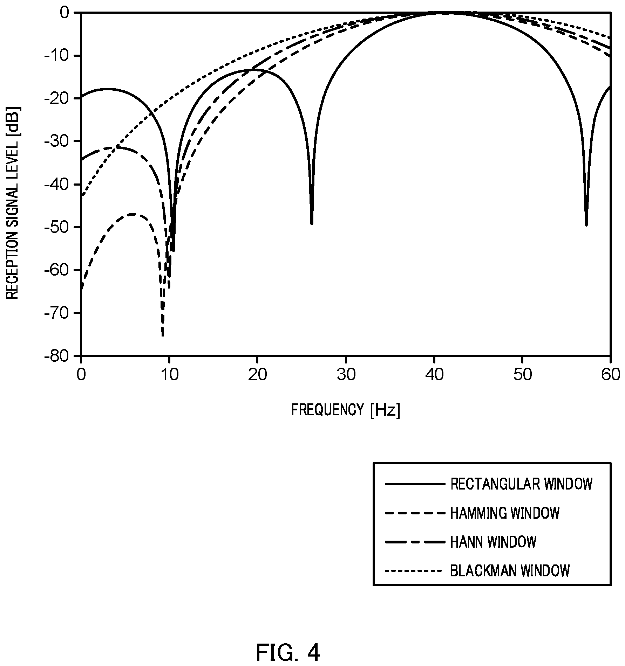

FIG. 4 illustrates a suppression of a DC value using window functions. FIG. 4 illustrates attenuation of components at each frequency in the case where a reflection signal from an object at a distance of 4 m is multiplied by window functions. The frequency component desired to be attenuated is a DC value (i.e., frequency 0), and FIG. 4 shows that the DC value is most significantly attenuated when the hamming window is used. Therefore, in the present embodiment, the hamming window is used as the window function. Thus, the leakage to the DC value due to the signal other than the reflection signal from the near object can be suppressed.

Further, while it is desirable and ideal that the received I/Q signal includes only the reflection signal from the target object located outside proximity sensor 100, a leakage signal of a transmission signal may practically enter the reception system on the substrate or in the interior of the circuit of proximity sensor 100, and furthermore, the reflection signal from the case of proximity sensor 100 may be included in the reception signal. It is difficult to separate such a signal from a reflection signal from a target near object. The reason for this is that their distances are small and almost no frequency difference is caused in the reception signal, thus making it difficult to achieve the separation.

In view of this, in the present embodiment, reference value storage part 127 and difference calculation part 126 are provided, and the leakage signal and the reflection signal from the case are preliminarily stored in reference value storage part 127 to remove such signals from the reception signal by difference calculation part 126. More specifically, reference value storage part 127 stores the DC voltage value that is output from average value calculation part 125 when no near object is present.

Additionally, in the present embodiment, the value of the DC-component stored in reference value storage part 127 is a plurality of temperature-dependent DC-component values that is acquired when proximity sensor 100 is disposed in a plurality of different temperature environments.

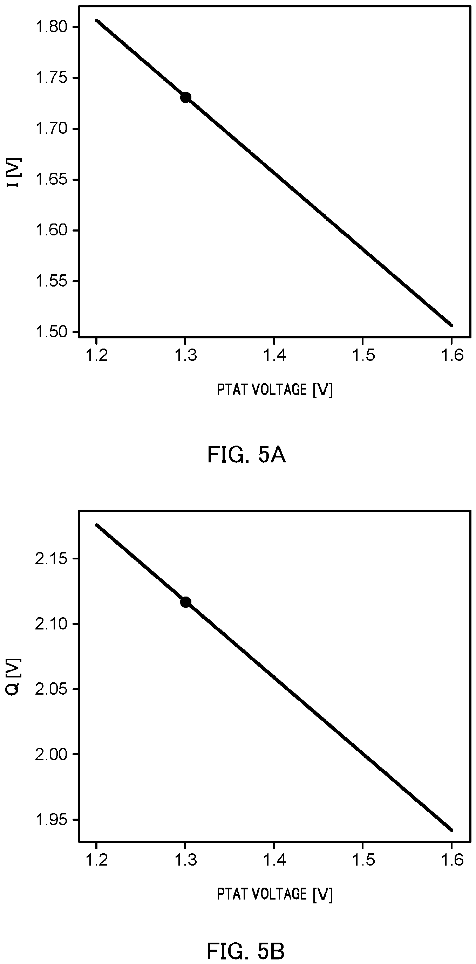

FIGS. 5A and 5B illustrate an example of the reference value stored in reference value storage part 127. FIG. 5A illustrates a reference value of an I-signal, and FIG. 5B illustrates a reference value of a Q-signal. The abscissa indicates a proportional to absolute temperature (PTAT) voltage, and may be construed that the temperature increases toward the right side. The PTAT voltage corresponds to the temperature measured by temperature sensor 132. In the example illustrated in FIGS. 5A and 5B, the reference value is a primary expression for the PTAT voltage, but may be a polynomial expression for the PTAT voltage, for example.

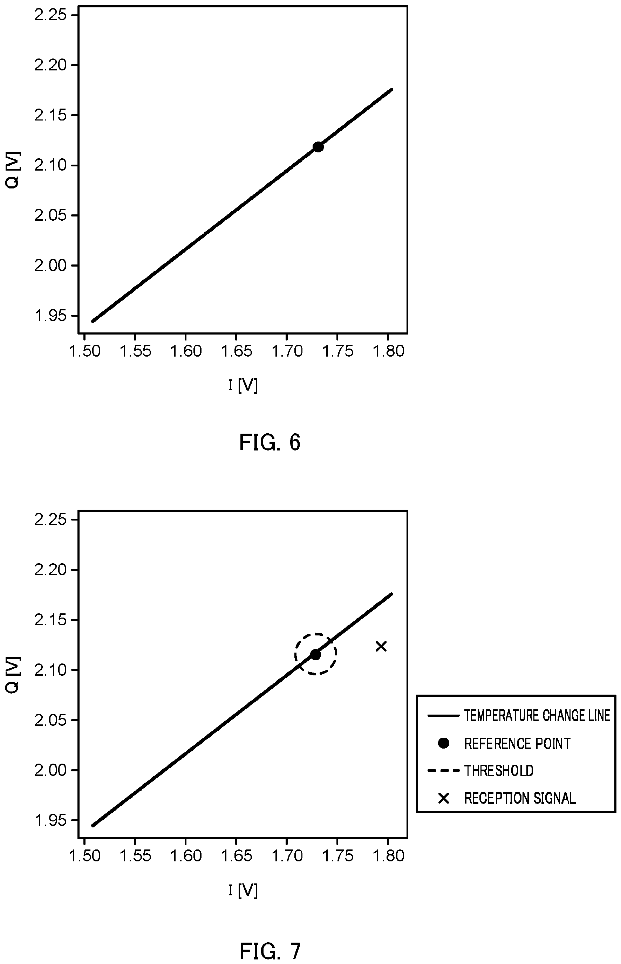

The black circle in FIG. 6 indicates a reference point on an I/Q plane when the PTAT voltage is 1.3 V. That is, when the PTAT voltage output from temperature sensor 132 is 1.3 V, a reference value corresponding to the position of the black circle in FIG. 6 is output from reference value storage part 127 to difference calculation part 126.

FIG. 7 is a graph for describing a threshold value determination performed by threshold value determination part 128. The x mark in the drawing indicates a reception signal point of a reflection signal from a near object. Difference calculation part 126 calculates the distance between the reference point indicated by the black circle and the reception signal point indicated by the x mark. Threshold value determination part 128 determines that a near object is present when the distance is equal to or greater than a threshold value, and threshold value determination part 128 determines that no near object is present when the distance is smaller than the threshold value. That is, when the reception signal point is outside the circle that indicates the threshold value, it is determined that a near object is present, and when the reception signal point is inside the circle, it is determined that no near object is present.

As described above, according to the present embodiment, with reception circuit 122 that receives a reflection signal from an object reflecting an FM-CW signal transmitted from transmission part 110, a DC-component acquisition part (average value calculation part 125) that acquires a DC-component included in a reflection signal received by the reception circuit 122, and the determination part (threshold value determination part 128) that determines whether the near object is present on the basis of the DC-component acquired by the DC-component acquisition part (average value calculation part 125), the influence of objects other than the near object as the detection object can be eliminated, and proximity sensor 100 that can more correctly detect whether the near object is present under various environments can be achieved.

In addition, with window function multiplication part 124 that removes a DC-component included in a reflection signal from an object other than the near object by multiplying, by a window function, the reflection signal received by reception circuit 122, the influence of the object other than the near object can be more reliably eliminated.

Further, with reference value storage part 127 that preliminarily stores a DC-component value that is acquired by the DC-component acquisition part (average value calculation part 125) under a circumstance where no near object is present, and difference calculation part 126 that calculates the difference between the DC-component acquired by DC-component acquisition part (average value calculation part 125) and the DC-component stored in reference value storage part 127, whether the near object is present can be determined on the basis of the difference value calculated by difference calculation part 126. Thus, the negative influence due to the reflection signal and/or the leakage signal inside proximity sensor 100 can be eliminated, and whether the near object is present can be more correctly detected.

The above-described embodiments represent only one exemplary embodiment in implementation of the invention, and the technical scope of the invention should not be construed as limited by them. In other words, the invention may be implemented in various forms to the extent that it does not deviate from its gist or its main features.

In the embodiment, a plurality of proximity sensors 100 is provided in each parking lot as illustrated in FIG. 3. When a plurality of proximity sensors 100 is provided in this manner, the reliability of the detection can be increased than a case where the presence/absence of a vehicle is detected using only one proximity sensor 100. As another embodiment, in place of the configuration including a plurality of proximity sensors 100, a plurality of transmission antennas 113 and/or a plurality of reception antennas 121 may be provided inside one proximity sensor 100 such that antenna diversity is performed by switching between the antennas. That is, by switching between a plurality of transmission antenna 113 and/or a plurality of reception antenna 121, it is possible to detect a plurality of positions in vehicle bottom 10a of vehicle 10. For example, by determining that a vehicle is present when any one of the antennas acquires a detection result indicating a presence of a vehicle, the vehicle detection error can be prevented.

While temperature sensor 132 is provided to output a reference value in accordance with the temperature from reference value storage part 127 in the embodiment, the reference value in accordance with the temperature may not be used. In such a case, for example, it suffices that difference calculation part 126 calculates the shortest distance between the temperature change line and the reception signal point indicated by the x mark in FIG. 7 to perform threshold determination of this shortest distance, and determines that a vehicle is present when the shortest distance is equal to or greater than the threshold value. With this configuration, the sensitivity of the determination of the presence of the vehicle is poorer than the case of the embodiment in which the temperature characteristics are taken into consideration. However, if it is mistakenly determined that a vehicle is present when no vehicle is present when it is used in a pay parking lot or the like, serious mistakes such as incorrect billing may result. By reducing the sensitivity for determining the presence of a vehicle, such a serious mistake can be prevented.

In the embodiment, proximity sensor 100 is used as a so-called parking sensor. In this case, the information on the presence/absence of a vehicle acquired by proximity sensor 100 is sent to a parking lot management apparatus from transmission antenna 131. The parking lot management apparatus has a billing function, a gate opening/closing control function, and/or the like. The parking lot management apparatus performs a billing process, and gate opening/closing control on the basis of vehicle presence information sent from proximity sensor 100. Note that, in the case where proximity sensor 100 is used as a so-called parking sensor, transmission part 110 may transmit FW-CW signals at an interval of one minute, for example. With this configuration, the power consumption can be suppressed, and as a result the frequency of the replacement of the battery and the like can be reduced.

Proximity sensor 100 described in the embodiment is not limited to a parking sensor, and may be widely applicable as a proximity sensor that detects whether the near object is present. For example, it is applicable to a sensor that is provided to a shelf in a warehouse to detect the presence/absence of objects, or to a sensor that detects the proximity of a person to control opening and closing of an automatic door.

While transmission part 110 includes FM-CW modulator 111, and an FM-CW signal is transmitted as a transmission signal in the embodiment, the present invention is not limited to this. Transmission part 110 may not be provided with FM-CW modulator 111, and a transmission signal with a constant frequency (e.g., a 24-GHz band transmission signal) may be transmitted from transmission circuit 112. In this case, the reception part is configured to include a reception circuit that receives, from an object, a transmission signal of a reflection signal transmitted from the transmission part and acquires an I/Q signal of the reflection signal, a DC-component acquisition part that acquires a DC-component included in the I/Q signal, and a determination part that determines whether the near object is present on the basis of the DC-component acquired by the DC-component acquisition part. With this configuration, as in the embodiment, a proximity sensor that can more correctly detect whether the near object is present under various environments can be achieved.

Here, when the FM-CW signal is used as a transmission signal as in the embodiment, the delay of the reception signal (reflection signal) with respect to the transmission signal appears as a difference in frequency, and therefore the distance to an object can be estimated based on the difference in frequency. On the contrary, when a signal whose frequency is constant is used as a transmission signal, the difference in frequency is not caused even when the distance to the object differs, and as such the distance to the object cannot be estimated. However, to determine whether the near object is present, estimation of the distance to the object is not necessarily required, and therefore a transmission signal whose frequency is constant can be used without using the FM-CW signal as a transmission signal. Here, when the FM-CW signal is used as a transmission signal in the above-described manner, a DC-component included in a reflection signal from an object other than the near object as a detection object can be removed by removing unnecessary components using a window function, and an object at a remote location can be excluded from the detection targets.

This application is entitled to and claims the benefit of Japanese Patent Application No. 2018-086330 filed on April 27, 2018, the disclosure of which including the specification, drawings and abstract is incorporated herein by reference in its entirety.

### Industrial Applicability

The present invention is widely applicable as a proximity sensor that detects whether a near object is present, and is suitable for a parking sensor, for example.

### Reference Signs List

10 Vehicle
100 Proximity sensor
110 Transmission part
111 FM-CW modulator
112, 129 Transmission circuit
113, 131 Transmission antenna
120 Reception part
121 Reception antenna
122 Reception circuit
123 Analog digital conversion circuit
124 Window function multiplication part
125 Average value calculation part
126 Difference calculation part
127 Reference value storage part
128 Threshold value determination part
132 Temperature sensor

## Claims

1. A proximity sensor comprising:
a transmission part including a transmission circuit configured to transmit a transmission signal; and
a reception part including
a reception circuit configured to receive, from an object, a reflection signal of the transmission signal transmitted from the transmission part, and acquire an I/Q signal of the reflection signal,
a DC-component acquisition part configured to acquire a DC-component included in the I/Q signal, and
a determination part configured to determine whether a near object is present on a basis of a DC-component acquired by the DC-component acquisition part.

2. The proximity sensor according to claim 1, wherein
the reception part further includes:
a storage part configured to preliminarily store a value of a DC-component that is acquired by the DC-component acquisition part under a circumstance where the near object is not present, and
a difference calculation part configured to calculate a difference between the DC-component acquired by the DC-component acquisition part and the DC-component stored in the storage part, and
the determination part determines whether the near object is present on a basis of a value of a difference calculated by the difference calculation part.

3. The proximity sensor according to claim 2, wherein the value of the DC-component preliminarily stored in the storage part is a plurality of temperature-dependent DC-component values that is acquired when the proximity sensor is disposed in a plurality of different temperature environments.

4. The proximity sensor according to claim 3, further comprising a temperature sensor, wherein
the storage part outputs a value of a DC-component corresponding to a temperature detection value acquired by the temperature sensor.

5. The proximity sensor according to claim 1, wherein
one proximity sensor includes a plurality of transmission antennas and/or a plurality of reception antennas, and
antenna diversity is performed through transmission of the transmission signal and/or reception of the reflection signal by switching between the plurality of transmission antennas and/or the plurality of reception antennas.

6. The proximity sensor according to claim 1, wherein
the transmission part transmits an FM-CW signal as the transmission signal; and
the reception part further includes a window function multiplication part configured to multiply the I/Q signal acquired by the reception circuit by a window function to remove a DC-component included in a reflection signal from an object other than the near object.

7. The proximity sensor according to claim 6, wherein the window function multiplication part uses a hamming window as the window function.

8. The proximity sensor according to claim 1, wherein the transmission part and the reception part are disposed on a ground.
